# EUROPEAN PATENT SPECIFICATION

(11) **EP 0 168 092 B1**
(45) Date of publication and mention of the grant of the patent: **28.04.1993**
(21) Application number: 85200975.2
(22) Date of filing: 19.06.1985
(51) Int. Cl.: F16C 33/78

(54) **Rolling element bearing with seals**
Wälzlager mit Dichtungsvorrichtung
Palier à roulement comprenant dispositifs d'étanchéité

(30) Priority: 13.07.1984 NL 8402222
(43) Date of publication of application: 15.01.1986
(73) Proprietor: SKF Industrial Trading & Development Co, B.V., NL-3439 MT Nieuwegein (NL)
(72) Inventor: Bras, Johan Christiaan Marinus, Tricht (NL); Lankamp, Herman, Dr., Odijk (NL)
(74) Representative: de Bruijn, Leendert C.

(56) References cited:
- EP-A- 0 198 324
- DE-A- 3 212 976
- FR-A- 2 052 808
- FR-A- 2 504 231
- GB-A- 1 598 681
- US-A- 2 639 954
- US-A- 2 945 707

## Description

The invention is related to a rolling element bearing, comprising an inner race, an outer race and in between these at least one row of rolling elements with a lubricant, and sealing means between and at the outside of the races, said sealing means each being formed by a generally annular element which at its outer circumference is attached to the outer race and which at its inner circumference includes a sealing lip of a flexible material which is adjacent to the inner race; whereby beside and at some distance from the side facing outward of each annular element a shield of a basically rigid material is placed, which is attached to the outer circumference of the inner race; whereby between the shield and the outer race there is a generally slot-shaped opening; whereby between each annular element and shield a space is formed which is connected via the slot-shaped opening to the environment of the bearing; whereby each shield includes a - with regard to the bearing - axially inwardly projecting ring-part which surrounds the inner race; and whereby said sealing lip of each annular element is basically adjacent to the outer circumference of this ring-part.

Such a rolling element bearing is known from FR-A-2 504 231. It comprises shields which consist of metal. Such shields are manufactured by stamping them out of a metal plate, which has the disadvantage of leaving waste material. Furthermore, in the stamping process only a limited number of particular shapes may be obtained.

The aim of the invention is therefore to provide a rolling bearing element of the type described above which does not have these disadvantages. This aim is achieved in that each shield is made of a synthetic material and comprises around the outer circumference of the ring-part an element for attachment of said shield, against which element the sealing lip of the annular element rests.

The shield, consisting of a synthetic material, can easily be manufactured with any specific shape at very low cost, e.g. by injection moulding. The metal element is only applied for connecting the shield to the inner bearing race, and for providing a seal together with the sealing lip of the sealing means.

Moreover, it has been shown that during operation of the bearing the centrifugal forces generate a current in the space between the shield and the corresponding annular element. In this connection, the shield can be given the most effective shape in order to generate said current for effectively removing moisture, water and/or dirt from said space.

The invention is further described with reference to the drawing in which:
Figure 1 shows in axial section part of a ball bearing according to the invention and
Figure 2 shows part of another form of execution of a bearing according to the invention, in axial section.

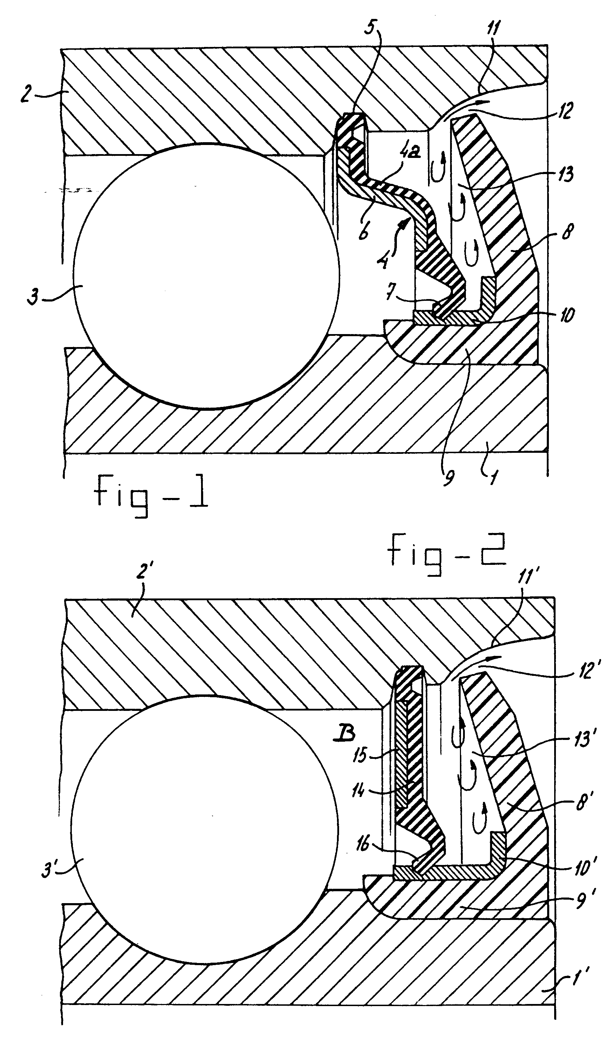

As represented in Figure 1, the bearing includes an inner race 1 and an outer race 2, and in between these a row of ball elements 3 in a lubricant (not further indicated). An annular sealing element 4 is contained at the outer circumference in a groove 5 formed in the outer race 2. This sealing ring consists of a flexible material 4A with, along part of it, an element 6 for support and rigidity, and a sealing lip 7 along the inner circumference of the sealing ring 4. Around the inner race 1 there is an annular shield 8 manufactured of a basically rigid synthetic material. Part of the shield 8 forms a ring 9 projecting inwardly in an axial direction, while an element for attachment 10 is applied around this ring 9. The outer circumference of the shield 8 is located at some distance from a bow-shaped recess 11 in the outer race 2, so that a slot-shaped opening 12 is formed.

When the hearing shown in Figure 1 is used in a moist, watery or muddy environment, the moisture or water can penetrate through the slot-shaped opening 12 into the space 13 formed between the sealing ring 4 and the shield 8. When the roller hearing is placed under load whereby, for example, the inner race 1 rotates, a current is generated in the moisture or water in space 13 under the influence of, among others, centrifugal forces, as indicated by the arrows in Figure 1, which current prevents moisture or water from penetrating between the sealing lip 7 and the ring 10 into the bearing, because it has been shown that, under the circumstances, the current is directed away from the sealing lip 7.

The roller hearing shown in Figure 2 corresponds largely to the bearing shown in Figure 1, so that corresponding parts are indicated by the same reference numbers, but with the addition of a prime symbol. However, in the bearing shown in Figure 2, the sealing ring 14 and the support element 15 ate almost straight, so that a somewhat different space 13' is formed between this ring-shaped sealing ring 14 and the shield 8'. The sealing lip 16 of the sealing ring 14 also rests against the attachment ring 10'. The extra sealing action which follows from the construction measure according to the invention again the same as in the bearing model shown in Figure 1. The advantage in this respect, however, is that the space B for the lubricant with regard to the space 13' for the current, can be adapted to specific circumstances according to the application of the bearing, for example, through the application of a larger amount of lubricant.

## Claims

1. Rolling element bearing, comprising an inner race (1; 1'), an outer race (2; 2') and in between these at least one row of rolling elements (3; 3') with a lubricant, and sealing means (4; 14) between and at the outside of the races, said sealing means each being formed by a generally annular element which at its outer circumference is attached to the outer race (2; 2') and which at its inner circumference includes a sealing lip (7; 16) of a flexible material which is adjacent to the inner race (1; 1'); whereby beside and at some distance from the side facing outward of each annular element (4; 14) a shield (8; 8') of a basically rigid material is placed, which is attached to the outer circumference of the inner race (1; 1'); whereby between the shield (8; 8') and the outer race (2; 2') there is a generally slot-shaped opening (12; 12'); whereby between each annular element (4; 14) and shield (8; 8') a space (13; 13') is formed which is connected via the slot-shaped opening (12; 12') to the environment of the bearing; whereby each shield (8; 8') includes a - with regard to the bearing - axially inwardly projecting ring-part (9; 9') which surrounds the inner race (1; 1'); and whereby said sealing lip (7; 16) of each annular element (4; 14) is basically adjacent to the outer circumference of this ring-part (9; 9'), characterized in that each shield (8; 8') is made of a synthetic material and comprises around the outer circumference of the ring-part (9; 9') an element (10; 10') for the attachment of said shield (8; 8'), against which element (10; 10') the sealing lip (7, 16) of the annular element (4, 14) rests.

2. Rolling bearing according to claim 1, characterized in that the slot-shaped opening (12: 12') is formed just between the bearing race (2; 2') and the end-part of the shield (8; 8').

## Patentansprüche

1. Wälzlager mit einem inneren Laufring (1; 1'), einem äußeren Laufring (2; 2') und zwischen diesen wenigstens einer Reihe Wälzkörpern (3; 3') mit einem Schmiermittel, sowie mit zwischen den Laufringen an deren Außenseite angeordneten Dichtungsmitteln (4; 14), die jeweils durch ein im wesentlichen ringförmiges Element gebildet sind, das an seinem äußeren Umfang mit dem äußeren Laufring (2; 2') verbunden ist und an seinem inneren Umfang eine Dichtlippe (7; 16) aus flexiblem Material aufweist, welche dem inneren Laufring (1; 1') benachbart ist, wobei neben jedem ringförmigen Element (4; 14) mit Zwischenabstand zu dessen Außenseite ein Schild (8; 8') aus im wesentlichen festem Material angeordnet ist, welcher auf dem Außenumfang des inneren Laufrings (1; 1') befestigt ist, zwischen dem Schild (8; 8') und dem äußeren Laufring (2; 2') eine im wesentlichen schlitzförmige Öffnung (12; 12') vorhanden ist, zwischen jedem ringförmigen Element (4; 14) und Schild (8; 8') ein Raum (13; 13') gebildet ist, der über die schlitzförmige Öffnung (12; 12') mit der Umgebung des Lagers verbunden ist, jeder Schild (8; 8') einen sich mit Bezug auf das Lager axial einwärts erstreckenden Ringteil (9; 9') aufweist, welcher den inneren Laufring (1; 1') umgibt, und die Dichtlippe (7; 16) jedes ringförmigen Elements (4; 14) im wesentlichen dem Außenumfang dieses Ringteils (9; 9') benachbart ist, **dadurch gekennzeichnet**, daß jeder Schild (8; 8') aus synthetischem Material besteht und ein sich um den Außenumfang des Ringteils (9; 9') erstreckendes Element (10; 10') zur Befestigung des Schilds (8; 8') aufweist, gegen welches Element (10; 10') die Dichtlippe (7, 16) des ringförmigen Elements (4, 14) anliegt.

2. Wälzlager nach Anspruch 1, **dadurch gekennzeichnet**, daß die schlitzförmige Öffnung (12; 12') unmittelbar zwischen dem Laufring (2; 2') und dem Endteil des Schilds (8; 8') gebildet ist.

## Revendications

1. Palier à roulement comportant une bague intérieure (1, 1'), une bague extérieure (2, 2'), au moins une rangée de corps roulants (3, 3') entre ces bagues avec un lubrifiant, et des moyens d'étanchéité (4, 14) placés entre les bagues et à l'extérieur de celles-ci, chaque moyen d'étanchéité étant formé par un élément globalement annulaire qui, au niveau de sa circonférence externe, est fixé à la bague extérieure (2, 2') et qui, au niveau de sa circonférence interne, inclut une lèvre d'étanchéité (7, 16) en matériau souple, adjacente à la bague intérieure (1, 1'), dans lequel, à côté et à une certaine distance du côté faisant face vers l'extérieur de chaque élément annulaire (4, 14), est placé un écran (8, 8') en matériau essentiellement rigide qui est fixé à la circonférence externe de la bague intérieure (1, 1'), dans lequel, entre l'écran (8, 8') et la bague extérieure (2, 2') se trouve une ouverture (12, 12') globalement en forme de fente, dans lequel, entre chaque élément annulaire (4, 14) et l'écran (8, 8'), est formé un espace (13, 13') relié par l'ouverture (12, 12') en forme de fente à l'environnement extérieur du palier, dans lequel chaque écran (8, 8') inclut, par rapport au palier, une partie d'anneau (9, 9') en saillie axiale vers l'intérieur, qui entoure la bague intérieure (1, 1'), et dans lequel ladite lèvre d'étanchéité (7, 16) de chaque élément annulaire (4, 14) est essentiellement adjacente à la circonférence externe de cette partie d'anneau (9, 9'), **caractérisé** en ce que chaque écran (8, 8') est fait d'une matière synthétique et en ce qu'il comporte autour de la circonférence externe de la partie d'anneau (9, 9') un élément (10, 10') pour fixer ledit écran (8, 8'), élément (10, 10') contre lequel s'appuie la lèvre d'étanchéité (7, 16) de l'élément annulaire (4, 14).

2. Palier à roulement selon la revendication 1, **caractérisé** en ce que l'ouverture en forme de fente (12, 12') est formée juste entre la bague (2, 2') du palier et la partie d'extrémité de l'écran (8, 8').
